# EUROPEAN PATENT APPLICATION

(11) **EP 4 552 540 A1**
(43) Date of publication of application: **14.05.2025**
(21) Application number: 24212668.8
(22) Date of filing: 13.11.2024
(51) Int. Cl.: A47J 31/42, A47J 31/44, A47J 31/52

(54) **AUTOMATIC COFFEE MACHINE AND PROCESS**

(30) Priority: 13.11.2023 PL 13179123 U
(71) Applicant: BSH Hausgeräte GmbH, 81739 München (DE)
(72) Inventor: Garschhammer, Florian, 83349 Palling (DE); Eder, Florian, 83132 Pittenhart (DE)

(57) **Abstract**

The present invention relates to a coffee machine with a body (1) includes a coffee bean container (2) located in the upper part of the body (1) for storing coffee beans (5) closed from above by a lid (3), a control panel (8) located in the upper part of the body (1), a coffee outlet unit (12) preferably located below the control panel (8), as well as a grinder, a brewing unit, and an actuator module (10) controlling at least one coffee brewing parameter, all placed inside the body (1), and a drip tray (11) located below the coffee outlet unit (12), preferably comprising a drawer for coffee grounds. The bean container (2) or the the lid (3), preferably at its inner side, has a code scanner (4) preferably for scanning a barcode, whose a reading head is directed downwards into the coffee bean container (2), and a computing module (6) next to the code scanner (4) or implemented in the control panel (8), which processes the information obtained via the scanner (4) and communicates via wired or wireless connection with the actuator module (10). The present invention also relates to a process for enabling a coffee bean (5) to support a coffee brewing parameter adjustment at a coffee machine.

## Description

The present invention relates to an automatic coffee machine that is provided with an automatically controlled regulatory device designed to adjust at least one parameter of coffee brewing to the coffee beans used in the machine. The present invention relates also to a process that enables coffee beans to support such coffee brewing parameter adjustment.

In automatic coffee machines, brewing parameters such as the grind size of the coffee, the amount of coffee used, the amount of water, or brewing time, water flow speed, and brewing temperature are often selected individually based on the coffee beans used or the user's individual preferences. This allows the appropriate intensity, taste, and aroma to be extracted from the coffee beans, depending primarily on the type of beans and the user's taste preferences. The primary factors affecting the taste of the final beverage include the coffee bean properties such as the type of coffee (Arabica, Robusta, and their blends), the degree of roasting, grind size, oil content, etc. For this reason, coffee manufacturers provide suggestions on packaging regarding the appropriate brewing parameter settings, allowing the user to manually adjust the coffee machine based on the provided brewing parameters to achieve the best possible flavor characteristics.

The inconvenience of known automatic coffee machines is that setting brewing parameters such as grind size, coffee amount, water amount, or brewing time can be complicated for the user, especially if the user needs to configure many parameters, each of which significantly affects the quality of the obtained beverage.

The document DE102021200925A1 discloses a coffee machine with a bean container for storing coffee beans. To ensure optimal coffee enjoyment, even for non-experts, the machine has an image-capturing device and a connected evaluating/controlling device. The image-capturing device is used to image the coffee beans in the bean container, and the evaluating/controlling device evaluates the captured image and sets or suggests brewing parameters based on the image. The drawback of this solution is that the classification of coffee beans is based solely on their external appearance.

The object of the present invention is to provide a process and a coffee machine that eliminate the inconvenience of manually entering brewing parameters based on information provided by the coffee producer. The coffee machine user can choose between automatic and manual brewing processes. Therefore, it eliminates the disadvantages of known solutions.

The object is solved by a coffee machine, in particular an automatic coffee machine equipped with a preferably rectangular body, which favorably influences the internal structure's utilization and organization while maintaining relatively small external dimensions. The coffee machine consists of the said body and comprises a coffee bean container located in the upper part of the body for storing coffee beans, covered from above with a lid. It has a control panel located in the upper front part of the body and a coffee outlet unit preferably located below the control panel. Inside the body, there is a grinder, brewing unit, actuator module controlling at least one brewing parameter, and other components typical for such machines. Below the coffee outlet unit, the machine has a drip tray, preferably with a drawer for coffee grounds, for condensation formed during the brewing process. The bean container or the lid have a code scanner, preferably on its inner side, preferably a barcode scanner, designed to read a code, preferably a barcode, on coffee beans placed in the container. The reading head is directed downwards into the coffee bean container towards the beans. Next to the scanner or implemented in the control panel is a computing module that processes the information obtained via the scanner, communicating either wirelessly or via a wired connection with the actuator module.

As code on a coffee bean, readable by the code scanner according to the invention, shall be meant any machine readable code, e.g. 2D-code like a barcode or QR-code, that can be placed directly at a coffee bean itself, e.g. by printing preferably with a food-safe color, frequency-selective color e.g. comprising a fluorescent or being only visible in infrared range, or normal optically visible colors, preferably by tampon printing the code directly to the coffee bean surface, by chemical reaction, by partial carbonization of the coffee bean surface, by mechanical milling of the coffee bean surface, by mechanical embossing or by laser marking e.g. by introducing indentations by a laser.

Preferably, the coffee bean container has a mounting seat on one side, in which an electronic connector socket is embedded. The lid comprises a plug for the electronic connector located where it is necessary to connect with the socket. The lid may also have a transmitter module wired to the computing module and wirelessly connected to an internet server, while inside the body, a wireless receiver module is placed to receive data from the internet server and communicate with the actuator module.

Preferably, the coffee beans in the container have a code extending along a longitudinal axis of the coffee bean, e.g. a barcode. Preferably, 10% to 30% of the total number of coffee beans in the container carry a barcode.

The present invention also relates to a process that enables a coffee bean to support such coffee brewing parameter adjustment by providing a machine readable code at the coffee bean. Thus, a coffee machine can be set up very easy according to this invention to solve the object mentioned above in a very convenient manner.

In an embodiment, the machine readable code is a 2D-code, preferably a barcode or QR-code, that comprises data that are related to or representative for a coffee brewing parameter adjustment. Due to the shape of coffee beans and the amount of data to be derived, a barcode can provide a very reliable and robust 2D-code, whereas a QR-code can enable a beneficial amount of properties and/or adjustment data per bean.

Preferably, the machine readable code is placed directly at the coffee bean surface. This does not only reduce the effort to bring the code to the coffee bean but also at same time reduces the effort to gather and process the information from the coffee bean in a coffee machine.

Preferably, the machine readable code is placed at a coffee bean by printing, chemical reaction, mechanical milling, mechanical embossing or laser marking. This enables either very easy (printing), very durable (chemical), very taste reliable (milling), very quick (embossing) or very cost efficient (laser) coding of the coffee bean.

Preferably, the machine readable code at the coffee bean contains coffee bean properties such as a type of coffee, a degree of roasting, a grind size and/or an oil content, and/or a coffee brewing parameter adjustment related to said properties. Therefore, the adjustment of the at least one parameter of coffee brewing can be very precise, easy, taste-reliant and/or convenient.

Preferably, a very cost efficient amount of min. 2,5%, or a still very cost efficient but surprisingly more reliable working amount of more than 5% of the total number of coffee beans of one production quantity, trade quantity and/or sale quantity are provided with the code. Very proper compromise between the effort for coding and the reliability of detection can be reached especially between 10% to 30%, e.g. depending on the diverging bean size of e.g. Arabica and Robusta beans. Amounts of about 12%, 14%, 17%, 19%, 21%, 24%, 27% or 28% can be very beneficial for the special requirements of different blends.

The advantage of this process and coffee machine is its usefulness to the user, as it frees the user from the tedious task of manually setting brewing parameters by providing an automated selection of brewing parameters for specific coffee types. Ideal brewing parameters may be established, for example, by the coffee producer in laboratory conditions and encoded in the form of a barcode, QR-code, or other graphical coding systems placed on the coffee bean. These recommended parameters can largely be replicated in a home environment through the scanning of the code on the coffee bean, and automatic settings for key brewing parameters such as grind size, brewing temperature, water pressure in the brewing unit, water flow rate, etc., performed by the actuator module.

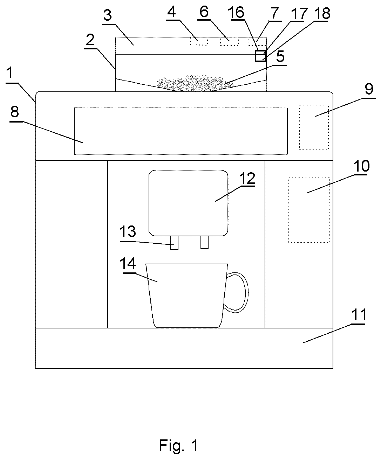

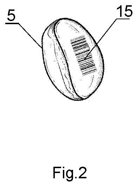

The invention is illustrated by an example shown in the figures, where fig. 1 shows the front view of the automatic coffee machine, and fig. 2 shows an example coffee bean with a barcode.

The coffee machine with a rectangular body 1 includes a coffee bean container 2 located in the upper part of the body 1 for storing coffee beans 5, closed from above with a lid 3. The coffee beans 5 are provided with a barcode 15 extending along the longitudinal axis. The barcode 15 contains encoded graphical information about the appropriate brewing parameters for that type of coffee, with 25% of the total number of coffee beans 5 in the coffee bean container 2 carrying the barcode. The upper front part of the body 1 comprises a control panel 8, and below it, the coffee outlet unit 12 with two spouts 13.

Inside the body 1, there are components typical for such machines, including a grinder, a brewing unit, an actuator module 10 controlling at least one brewing parameter, and other components. Below the coffee outlet unit 12, there is a drip tray 11, including a drawer for coffee grounds and condensation. The inner side of the lid 3 comprises a barcode scanner 4, with a reading head directed downwards into the coffee bean container 2, and a computing module 6 next to it, which processes the information obtained by the scanner 4 and communicates via wired or wireless connection with the actuator module 10. The coffee bean container 2 has a mounting seat 16 on the right side, with a connector socket 18 embedded in it, while the lid 3 has a plug 17 for the electronic connector, positioned to align with the socket 18. Inside the lid 3, there is also a transmitter module 7 connected to the computing module 6 and wirelessly connected to an internet server, while a wireless receiver module 9 inside the body 1 receives data from the internet server and communicates with the actuator module 10.

Not illustrated in the figures is a process in which 12%, 14%, 17%, 19%, 21%, 24%, 27% or 28% of the total number of coffee beans 5 of one production quantity, and therefore in this example also trade quantity and sale quantity, are guided in a production step to a coding facility in which a barcode is provided on a bean 5 surface by laser marking. This barcode contains information regarding coffee bean 5 properties of said production quantity, here a type of coffee, a degree of roasting, a preferred grind size and an oil content, from which a coffee brewing parameter adjustment related to said properties can be derived.

## Claims

1. A coffee machine with a, preferably rectangular, body (1), which includes a coffee bean container (2) located in the upper part of the body (1) for storing coffee beans (5) closed from above by a lid (3), a control panel (8) located in the upper front part of the body (1), a coffee outlet unit (12) preferably located below the control panel (8), as well as a grinder, a brewing unit, and an actuator module (10) controlling at least one coffee brewing parameter, all of which are placed inside the body (1), and a drip tray (11) located below the coffee outlet unit (12) preferably comprising a drawer for coffee grounds, **characterized in that** the bean container (2) or the lid (3), preferably on its inner side, comprises a code scanner (4) preferably for scanning a barcode, whose a reading head is directed downward into the coffee bean container (2), as well as a computing module (6) placed next to the code scanner (4) or implemented in the control panel (8), processing the information obtained via the barcode scanner (4), and connected via wired or wireless communication to the actuator module (10).

2. The coffee machine according to claim 1, **characterized in that** the coffee bean container (2) on one of its sides has a mounting seat (16), in which a connector socket (18) is embedded, while the lid (3) has a plug (17) for the electronic connector, positioned to align with the socket (18) for connection.

3. The coffee machine according to claims 1 or 2, **characterized in that** the lid (3) contains a transmitter module (7) connected via wire to the computing module (6) and wirelessly to an internet server, while inside the body (1), there is a wireless receiver module (9) receiving data from the internet server and communicating with the actuator module (10).

4. The coffee machine according to claims 1-3, **characterized in that** at least one coffee bean (5) in the coffee bean container (2) has a barcode (15) extending along the longitudinal axis of the coffee bean (5).

5. The coffee machine according to claim 4, **characterized in that** 10% to 30% of the total number of coffee beans (5) placed in the coffee bean container (2) have the barcode (15).

6. Process for enabling a coffee bean (5) to support a coffee brewing parameter adjustment at a coffee machine, **characterized by** providing a machine readable code at the coffee bean (5).

7. Process according to claim 6, **characterized in that** the machine readable code is a 2D-code, preferably a barcode or QR-code, that comprises data that are related to or representative for a coffee brewing parameter adjustment.

8. Process according to claim 6 or 7, **characterized in that** the machine readable code is placed directly at the coffee bean (5) surface.

9. Process according to one of the claims 6 to 8, **characterized in that** the machine readable code is placed at a coffee bean (5) by printing, chemical reaction, mechanical milling, mechanical embossing or laser marking.

10. Process according to one of the claims 6 to 9, **characterized in that** the machine readable code at the coffee bean (5) contains coffee bean (5) properties such as a type of coffee, a degree of roasting, a grind size and/or an oil content, and/or a coffee brewing parameter adjustment related to said properties.

11. Process according to one of the claims 6 to 10, **characterized in that** min. 2,5%, preferably more than 5%, especially 10% to 30%, of the total number of coffee beans (5) of one production quantity, trade quantity or sale quantity are provided with the code (15).
